# NEUE EUROPÄISCHE PATENTSCHRIFT

(11) **EP 1 197 312 B2**
(45) Veröffentlichungstag und Bekanntmachung des Hinweises auf die Entscheidung über den Einspruch: **02.12.2009**
(45) Hinweis auf die Patenterteilung: 03.08.2005
(21) Anmeldenummer: 01123539.7
(22) Anmeldetag: 29.09.2001
(51) Int. Cl.: B29C 45/17

(54) **Wasserinjektionsverfahren zum Spritzgiessen polymerer Formteile**
Water injection method for injection moulding of plastic molded parts
Procédé d'injection d'eau pour moulage par injection de pièces en matière plastique

(30) Priorität: 13.10.2000 AT 17552000
(43) Veröffentlichungstag der Anmeldung: 17.04.2002
(73) Patentinhaber: ENGEL AUSTRIA GmbH, 4311 Schwertberg (AT)
(72) Erfinder: Steinbichler, Georg, 8786 Rottenmann (AT); Ebenhofer, Harald, 4320 Perg (AT); Zyrull, Karsten, 66578 Schiffweiler (DE); Gomez, Pedro, 4030 Linz (AT)
(74) Vertreter: Torggler, Paul Norbert

(56) Entgegenhaltungen:
- EP-A- 0 370 487
- DE-A- 19 631 804
- DE-A- 19 903 682
- MICHAELI W ET AL: "KÜHLZEIT REDUZIEREN MIT DER WASSER-INJEKTIONSTECHNIK" KUNSTSTOFFE, CARL HANSER VERLAG. MUNCHEN, DE, Bd. 90, Nr. 8, August 2000 (2000-08), Seiten 67-72, XP000963683 ISSN: 0023-5563
- MICHAELI W.: 'Gas oder Wasser? - Spritzgiessen von Hohlkörpern durch Fluidinjektion' KUNSTSTOFFE Bd. 89, Nr. 9, 1999, CARL HANSER VERLAG MÜNCHEN, Seiten 56 - 62
- MENNY K.: 'Strömungsmaschinen', 1995, B. G. TEUBNER VERLAG, STUTTGART
- KRAEMER H.: 'Elektrotechnik im Maschinenbau', 1984, FRIEDR. VIEWEG VERLAG, BRAUNSCHWEIG
- CITplus: 'Marktübersicht Flüssigkeitspumpen', Wiley-VCH Verlag GmbH, Heft April 1999 (ONLINE)

## Beschreibung

Die Erfindung bezieht sich auf ein Verfahren zum Spritzgießen von Kunststoff, bei dem Kunststoffschmelze in eine Form und Wasser ins Innere der Schmelze eingebracht wird, wobei in einem ersten Verfahrensschritt die vollständige Bauteilausformung durch Schmelzeverdrängung über das injizierte Wasser unter gleichzeitiger Bildung des Hohlraumes im Innenkern erfolgt und danach der Wasserdruck die Nachdruckfunktion übernimmt.

Seit ca. 15 Jahren wird die Gasinjektionstechnik industriell zur Produktion spritzgegossener Hohlkörper eingesetzt. Die verwendeten Gase (zumeist Stickstoff) haben aber den Nachteil, daß die Prozeßbeherrschung aufgrund der hohen Kompressibilität schwieriger ist und eine Kühlung der Kunststoffschmelze von der Hohlraumseite aufgrund der geringen Wärmeaufnahmekapazität der Gase nicht effizient ist.

Diese Nachteile können durch Einsatz von Flüssigkeit, insbesondere Wasser, anstelle eines Gases beseitigt werden (vgl. XP 000958427: Walter Michaeli et al., "Gas oder Wasser?" in KU Kunststoffe, Jahrgang 89 (1999) 9). Dabei wird das Wasser im einfachsten Fall in einen mit Kunststoffschmelze teilgefüllten Werkzeughohlraum injiziert. Im ersten Prozeßschritt erfolgt die vollständige Bauteilausformung durch Schmelzeverdrängung über das injizierte Wasser unter gleichzeitiger Bildung des Hohlraumes im Innenkern. Danach übernimmt der Wasserdruck ähnlich wie bei der konventionellen Spritzgießtechnik die Nachdruckfunktion. Üblicherweise wird das Wasser in der Druckhaltephase auf einem Druckniveau gehalten, bei dem eine Verdampfung des Wassers vermieden wird. Das Wasser kann aufgrund seiner wesentlich größeren spezifischen Wärme auch einen beträchtlichen Teil der Wärmemenge von der Hohlraumseite aus der Schmelze aufnehmen. Wenn es abhängig von Bauteilgeometrie in einem sogenannten Spülverfahren gelingt, einen Wasserdurchfluß zu erzeugen, so kann die Kühlzeit gegenüber der Gasinjektionstechnik bis um 70% reduziert werden.

Von der Gasinjektionstechnik bekannte Verfahrensvarianten wie das Ausschieben überschüssiger Schmelze aus dem Innenkern eines Bauteiles in eine Nebenkavität oder zurück in den Schneckenvorraum sind auch mit der Wasserinjektionstechnik durchführbar.

Bedingt durch die historische Entwicklung sind die bekanntgewordenen Versuchsanlagen für die Wasserinjektion konstruktiv von den für die Gasinjektionstechnik bekannten Anlagen abgeleitet. Dort wird jedoch aufgrund der hohen Kompressibilität des Gases der Stickstoff fast ausschließlich druckgeregelt injiziert. Die benötigte Zeit für die Hohlraumausbildung ist damit stark von Schmelzeviskosität und thermischen Randbedingungen abhängig. Bei Wasser hingegen bietet sich wegen der geringen Kompressibilität außerhalb der Druckhaltephasen eine Steuerung oder Regelung über den Volumenstrom an.

In allen bisher bekannten Anlagen werden Pumpen mit konstanter Drehzahl angetrieben realisiert. Beispielsweise offenbart die DE 199 03 682 A1 eine Anlage, bei der zur Erzielung verschiedener Volumenströme mehrere, parallel geschaltete Pumpen eingesetzt werden. Dies ist sowohl aus energetischen als auch aus Verschleißgründen bei Einsatz eines Druckbegrenzungsventils im Bypass nicht vorteilhaft (vgl. XP 000963683: Walter Michaeli et al, "Kühlzeit reduzieren mit der WasserInjektionstechnik" in KU Kunststoffe, Jahrg. 90 (2000) 8).

Erfindungsgemäß ist vorgesehen, daß außerhalb der Druckhaltephasen eine Regelung der Wasserinjektion über den Volumenstrom erfolgt, wobei über eine von einem Motor angetriebene Pumpe durch Veränderung der Drehzahl des Motors und/oder des Hubvolumens der Pumpe die Fördermenge oder der Druck des Wassers eingestellt wird.

Einzelheiten der Erfindung werden anschließend anhand der Zeichnung erläutert. In dieser ist
Fig. 1 die schematische Darstellung einer Anlage zum Spritzgießen,
Fig. 2a - 2c sind drei Beispiele für regelbare Motor/Pumpen-Kombinationen.

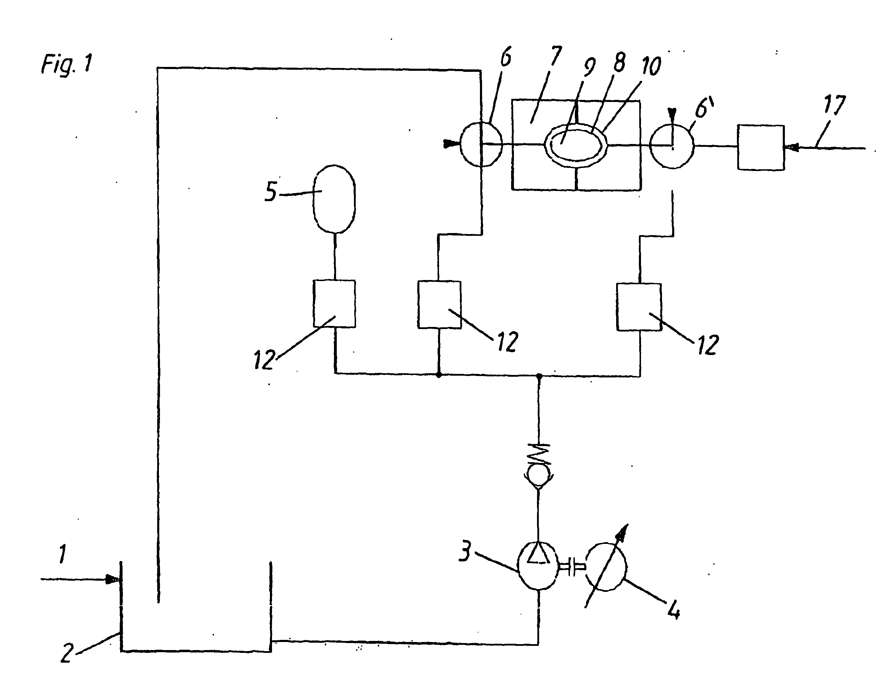

Kernstück der in Fig. 1 dargestellten Anlage ist die Form 7, in deren Kavität 10 in bekannter Weise Kunststoff eingefüllt werden kann.

Das Besondere an dem der Erfindung zugrundeliegenden Verfahren ist die Einbringung von Wasser in die Kunststoffschmelze, während diese in der Form 7 erstarrt.

Beim sogenannten Aufblasverfahren erfolgt zunächst eine Teilfüllung der Kavität 10 mit Kunststoff 8, anschließend wird dem Tank 2 über die Leitung 1 zugeführtes Brauchwasser über die Pumpe 3 die Absperrventile 12 und die Dreiwege-Ventile 6, 6' in die Schmelze eingespritzt, sodaß sich in dieser ein mit Wasser gefüllter Hohlraum 9 bildet. Wenn die Form gefüllt ist, wird der eingestellte Druck über einen Druckspeicher 5 aufrechterhalten. Anschließend wird das Ventil 6 auf Tankleitung umgeschaltet, in den Hohlraum 9 wird eine Ausblasnadel eingestochen, und durch Luftzufuhr über die Leitung 17 wird das Wasser aus dem Hohlraum 9 im Inneren des Kunststoffes 8 ausgeblasen.

Anstelle des beschriebenen Aufblasverfahrens kann auch ein Ausblasverfahren durchgeführt werden, welches sich dadurch unterscheidet, daß die Kavität 10 zunächst völlig mit Kunststoff gefüllt und dieser teilweise in eine nicht dargestellte Nebenkavität überführt wird. Auch Spülverfahren sind bekannt, bei denen während des ganzen Erstarrungsvorgangs der Schmelze ein Flüssigkeitsaustausch im Inneren des gespritzten Teiles erfolgt.

In allen dargestellten Fällen ist in der Druckhaltephase ein an sich bekannter Membranspeicher 5 eingesetzt. Die Aufladung desselben auf einen variablen Haltedruck erfolgt vor dem Start der Wasserinjektion.

Ein Vorteil des beschriebenen Verfahrens liegt in der Möglichkeit, das verwendete Wasser wieder zu verwerten. Dazu ist es notwendig, dieses zu filtern und vorzugsweise eine Wasserentkeimung mittels UV-Bestrahlung direkt am Wasserbehälter vorzusehen.

An der automatischen Frischwassernachspeisung zur Abdeckung von Verlusten ist eine Einrichtung zur Deionisierung (Entsalzung) des Wassers eingebaut.

Die Absperrung der Wasserkreise erfolgt vorzugsweise direkt über ein Dreiwege-Ventil am oder im Werkzeug. Dies ist besonders wichtig, da in den bisher bekannten Fällen die Wegeventile in der Anlage sitzen und größere Leitungslängen beim Ausblasen des Wassers mit Luft gefüllt werden. Diese Luft wird aber unweigerlich im nächsten Zyklus in die Schmelze injiziert und bildet einen unerwünschten Luftpolster, der partiell die Kühlwirkung herabsetzt und damit den eigentlichen Vorteil der Wasserinjektionstechnik aufhebt.

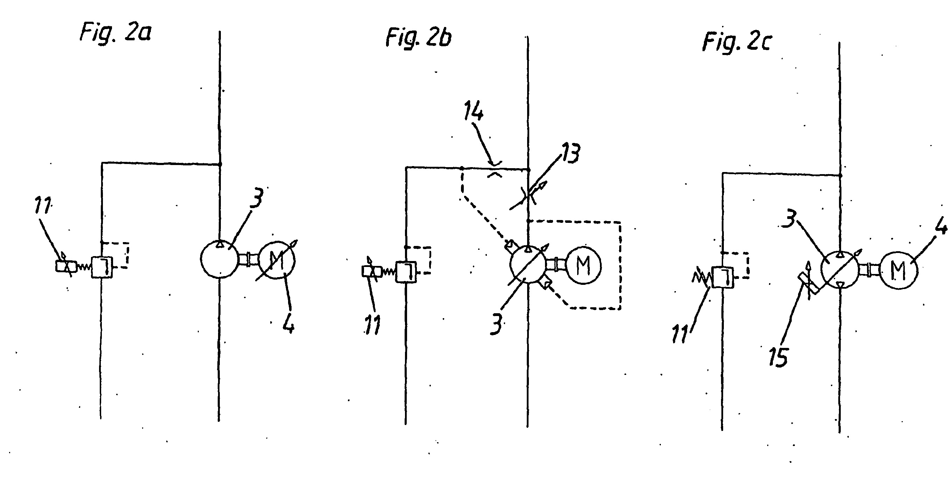

In Fig. 2a - 2c sind Beispiele dafür dargestellt, wie die energiesparende Wasserzuführung gemäß der Erfindung erfolgen kann.

Beim Ausführungsbeispiel nach Fig. 2a ist eine Pumpe 3 mit konstantem Fördervolumen vorgesehen. Die Fördermenge wird durch Drehzahlveränderung des Motors 4 gesteuert, welcher beispielsweise ein Servomotor oder ein Drehstromasynchronmotor mit Frequenzumformung sein kann. Soll statt der Mengenregelung während der Haltephase eine Druckregelung erfolgen, so dient hiezu das Druckproportionalventil 11, über welches im Vergleich zum herkömmlichen Bypass nur minimale Mengen zum Tank 2 abfließen.

Beim Ausführungsbeispiel nach Fig. 2b wird ein Motor mit konstanter Drehzahl, beispielsweise ein Drehstromasynchronmotor verwendet. Die Pumpe 3 ist als Regelpumpe ausgebildet. Die Förderstromregelung erfolgt über die verstellbare Drossel 13. Soll andererseits (während einer Haltephase) eine Druckregelung erfolgen, so fließt ein geringer Nebenstrom über die Drossel 14 und das Druckproportionalventil 11.

Beim Ausführungsbeispiel nach Fig. 2c ist wiederum ein Motor mit konstanter Drehzahl vorgesehen, das Ventil 11 ist ein einfaches Druckbegrenzungsventil, die Verstellung der Pumpe 3 erfolgt über eine elektrische Steuerung 15, welche das Fördervolumen der Pumpe bestimmt.

## Patentansprüche

1. Verfahren zum Spritzgießen von Kunststoff,bei dem Kunststoffschmelze in eine Form (7) und Wasser ins Innere der Schmelze eingebracht wird, wobei in einem ersten Verfahrensschritt die vollständige Bauteilausformung durch Schmelzeverdrängung über das injizierte Wasser unter gleichzeitiger Bildung des Hohlraumes (9) im Innenkern erfolgt und danach der Wasserdruck die Nachdruckfunktion übemimmt, **dadurch gekennzeichnet, dass** außerhalb der Druckhaltephasen eine Regelung der Wasserinjektion über den Volumenstrom erfolgt, wobei über eine von einem Motor (4) angetriebene Pumpe (3) durch Veränderung der Drehzahl des Motors (4) und/oder des Hubvolumens der Pumpe (3) die Fördermenge oder der Druck des Wassers eingestellt wird.

2. Verfahren nach Anspruch 1, **dadurch gekennzeichnet, dass** der die Pumpe (3) antreibende Motor (4) ein Servomotor oder ein Drehstromasynchronmotor, vorzugsweise mit Frequenzumformung, ist.

3. Verfahren nach Anspruch 1 oder 2 , **dadurch gekennzeichnet, dass** die Absperrung der Wasserzufuhr über ein direkt am oder im Werkzeug angeordnetes Dreiwege-Ventil (6, 6') erfolgt.

## Claims

1. Method for the injection molding of plastic material, wherein molten plastic material is inserted into a mold cavity (7) and water is injected into the interior of the molten plastic material, wherein in a first step of the procedure the complete molding of the component part is carried out by the displacement of the molten plastic material by the injected water, the hollow space in the inner core (9) being generated at the same time, and afterwards the water pressure takes over the function of the dwell pressure, **characterized in that** beyond the periods of pressure maintenance a closed loop control of the water injection is carried out by the volume of the flow, wherein the delivery flow or the pressure of the water is adjusted by a pump (3) powered by a motor (4) by changing the rotational frequency of the motor (4) and/or the displaced volume of the pump (3).

2. Method according to claim 1, **characterized in that** motor (4) powering the pump (3) is a servo motor or a three-phase asynchronous motor, preferably with frequency conversion.

3. Method according to claim 1 or 2, **characterized in that** the shutting off of the water supply is carried out via a three-way valve (6, 6') arranged directly at or in the tool.

## Revendications

1. Procédé de moulage par injection de matière plastique, dans lequel une masse fondue de matière plastique est placée dans un moule (7) et de l'eau est injectée à l'intérieur de la masse fondue, de telle manière que dans une première étape de Procédé, le moulage complet de à pièce est réalisé par déplacement de la masse fondue provoqué par l'eau injecté, avec formation concomitante de l'espace creux (9) dans le noyau interne, et la pression d'eau assure ensuite la fonction de maintien sous pression, **caractérisé en ce qu'**en dehors des phases de maintien sous pression, une régulation de l'injection d'eau est réalisée par l'intermédiaire du débit volumique, de sorte que le débit ou la pression de l'eau est réglé par l'intermédiaire d'une pompe (3) entraînée par un moteur (4) au moyen d'un changement de vitesse du moteur (4) et/ou de cylindrée de la pompe (3).

2. Procédé selon la revendication 1, **caractérisé en ce que** le moteur (4) entraînant la pompe (3) est un servomoteur ou un moteur asynchrone à plusieurs phases, de préférence à conversion de fréquence.

3. Procédé selon la revendication 1 ou 2, **caractérisé en ce que** la fermeture de l'arrivée d'eau s'effectue par l'intermédiaire d'une vanne à trois voiles (6, 6') disposée directement sur ou dans l'outil.
